# EUROPÄISCHE PATENTSCHRIFT

(11) **EP 2 297 010 B1**
(45) Veröffentlichungstag und Bekanntmachung des Hinweises auf die Patenterteilung: **20.02.2013**
(21) Anmeldenummer: 09775881.7
(22) Anmeldetag: 22.05.2009
(51) Int. Cl.: B65G 47/96

(54) **FÖRDERVORRICHTUNG MIT ENTGEGEN DER VERFAHRRICHTUNG ANTREIBBARER ABSCHIEBEEINRICHTUNG**
CONVEYING MECHANISM WITH PUSHING-OFF DEVICE THAT CAN BE DRIVEN COUNTER TO THE DIRECTION OF TRAVEL
DISPOSITIF DE TRANSPORT COMPRENANT UN APPAREIL DE POUSSÉE ENTRAÎNÉ À L ENCONTRE DE LA DIRECTION DE DÉPLACEMENT

(30) Priorität: 10.07.2008 DE 202008009280 U
(43) Veröffentlichungstag der Anmeldung: 23.03.2011
(73) Patentinhaber: BEUMER GmbH & Co. KG, 59269 Beckum (DE)
(72) Erfinder: PÖLLING, Ludger, 59329 Wadersloh-Diestedde (DE)
(74) Vertreter: Philipp, Matthias
(86) Internationale Anmeldenummer: PCT/DE2009/000737
(87) Internationale Veröffentlichungsnummer: WO 2010/003392

(56) Entgegenhaltungen:
- WO-A-91/03324
- WO-A-98/31617

## Beschreibung

Die Erfindung betrifft eine Fördervorrichtung mit einer Anzahl von entlang einer Führungseinrichtung bewegbaren Transporteinheiten, gemäß dem Oberbegriff des Anspruch 1. Eine solche Fördervorrichtung ist bereits aus WO 9831617 A bekannt.

Derartige Stückgut-Fördervorrichtungen sind in unterschiedlichen Ausgestaltungen bekannt, wobei sich zur schonenden Aufnahme und Abgabe von Stückgutteilen auch sogenannte Quergurtsorter bewährt haben, bei denen an der Oberseite der Transporteinheiten ein quer zur eigenen Verfahrrichtung der Transporteinheiten antreibbarer Trägergurt angeordnet ist, der entsprechend der jeweiligen Aufnahme- oder Abgabesituation mit einer bestimmten Geschwindigkeit in einer vorgegebenen Richtung angetrieben wird. Ein solcher Quergurtsorter ist etwa aus der EP 0 700 844 A2 bekannt.

Obwohl sich Quergurtsorter in vielen Anwendungsfällen bewährt haben, besteht doch gerade bei der Handhabung empfindlicher Stückgüter der Nachteil, dass beim Abgabe- oder Ausschleusvorgang die zum Teil erhebliche kinetische Energie des Stückgutteils im Ausschleusbereich abgebaut werden muss, was häufig mit Stoßbeanspruchungen einhergeht.

An diesem grundsätzlichen Problem haben auch alternative Abgabesysteme nichts ändern können, beispielsweise solche, bei denen ein Stückgutteil im Abgabebereich von Klappen fallengelassen wird oder von einem Abstreifelement, gegen das es anläuft, von der Transporteinheit abgestreift wird.

Die Erfindung hat sich daher zum Ziel gesetzt, eine gattungsgemäße Fördervorrichtung dahingehend weiterzuentwickeln, dass die Beanspruchung der abzugebenden Stückgutteile im Auf- oder Abgabebereich trotz der auf- oder abzubauenden kinetischen Energie minimiert wird.

Diese Aufgabe wird erfindungsgemäß bei einer gattungsgemäßen Fördervorrichtung durch die Maßnahme gelöst, dass an der Oberseite der Transporteinheiten zur schonenden Aufnahme und/oder Abgabe von Stückgutteilen jeweils eine entgegen einer Verfahrrichtung der Transporteinheit antreibbare Abschiebeeinrichtung angeordnet ist, wobei die Abschiebeeinrichtung mit einer Abschiebegeschwindigkeit antreibbar ist die ebenso groß wie eine Verfahrgeschwindigkeit der jeweiligen Transporteinrichtung oder größer als diese ist.

Die Abschiebeeinrichtung kann als Pusher, d.h. in Form eines Abstreifers o.ä., oder als Band- oder Rollenförderer ausgebildet sein.

Es kann vorgesehen sein, dass eine Förderfläche der Abschiebeeinrichtung parallel zur Verfahrrichtung der Transporteinrichtung angeordnet ist. In diesem Fall können die Transporteinheiten mit einem gegenseitigen Abstand in Verfahrrichtung angeordnet sein, der mindestens einer Längsabmessung eines zu transportierenden Stückgutteils entspricht.

Alternativ kann vorgesehen sein, dass eine Förderfläche der Abschiebeeinrichtung in Verfahrrichtung gesehen ansteigend angeordnet ist. In diesem Fall kann vorgesehen sein, dass die Transporteinheiten mit einem gegenseitigen Abstand in Verfahrrichtung angeordnet sind, der kleiner ist als eine Längsabmessung der zu transportierenden Stückgüter, und bei entsprechender Neigung der Förderflächen sogar im wesentlichen ohne gegenseitigen Abstand.

Umgekehrt kann vorgesehen sein, dass eine Förderfläche der Abschiebeeinrichtung in Verfahrrichtung gesehen abfallend angeordnet ist. In diesem Fall ist zweckmäßigerweise vorgesehen, dass die Transporteinheiten mit einem gegenseitigen Abstand in Verfahrrichtung angeordnet sind, der einer Längenabmessung eines zu transportierenden Stückgutteils entspricht oder größer ist als diese.

Bei einer geneigten Anordnung der Förderfläche der Abschiebeeinrichtung kann vorgesehen sein, dass die Förderflächen unter einem Winkel von mindestens 2°, 5°, 10°, 15°, 20° oder 30° gegenüber der Horizontalen geneigt angeordnet sind.

Bevorzugt sieht die Erfindung vor, dass jede Transporteinheit mit Abstand seitlich neben der Führungseinrichtung angeordnet ist. Zweckmäßigerweise ist vorgesehen, dass je zwei Transporteinheiten beiderseits der Führungseinrichtung einander gegenüberliegend angeordnet sind.

Eine Variante der Erfindung sieht vor, daß die Transporteinheiten mit Abstand oberhalb der Führungseinrichtung angeordnet sind. Zweckmäßigerweise sind die Transporteinheiten hierbei an einer in Verfahrrichtung gesehen C-förmigen Halterung angeordnet. Eine Aufnahmeeinrichtung kann in einem Zwischenraum zwischen der Führungseinrichtung und den Transporteinheiten angeordnet sein.

Als weitere Alternative kann vorgesehen sein, daß die Transporteinheiten mit Abstand unterhalb der Führungseinrichtung angeordnet sind. Eine gemischte Bauweise mit Transporteinheiten seitlich und/oder oberhalb und/oder unterhalb der Führungseinrichtung kann ebenfalls zweckmäßig sein.

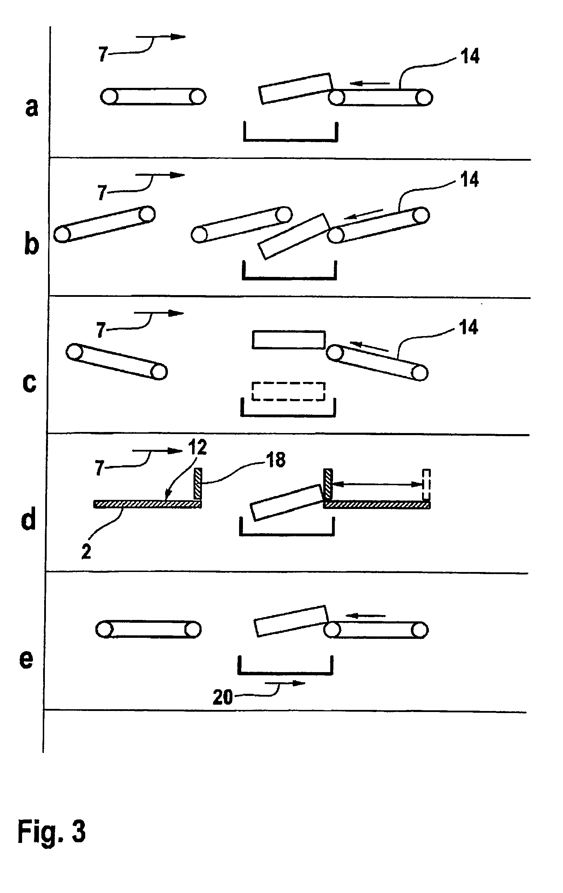

Die Erfindung wird nachfolgend unter Bezugnahme auf eine Zeichnung weiter erläutert, wobei Fig. 3 eine schematische perspektivische Ansicht einer erfindungsgemäßen Fördervorrichtung zeigt.
Fig. 1 eine schematische perspektivische Ansicht einer erfindungsgemäßen Fördervorrichtung zeigt,
Fig. 2a - h aufeinanderfolgende Phasen eines Abgabevorgangs der erfindungsgemäßen Fördervorrichtung zeigen,
Fig. 3a - e verschiedene Varianten der Erfindung erläutern, und
Fig. 4 eine weitere Ausführungsform der Erfindung zeigt.

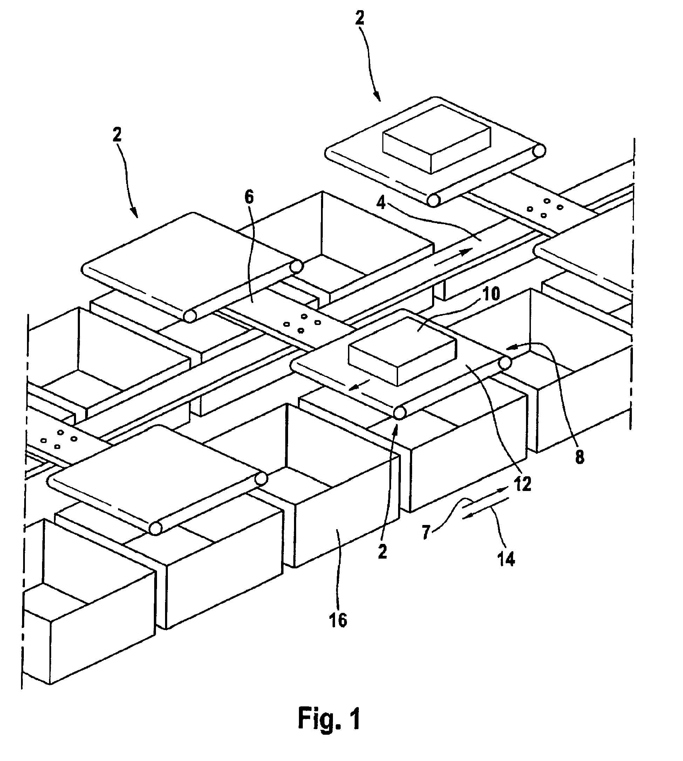

Zunächst sei auf Fig. 1 Bezug genommen, die den grundsätzlichen Aufbau einer erfindungsgemäßen Fördervorrichtung beispielhaft zeigt. Eine Anzahl von Transporteinheiten 2 sind jeweils paarweise beiderseits einer Führungseinrichtung 4 angeordnet und beispielsweise auf Wagen 6 gehalten, die entlang der Führungseinrichtung in einer Verfahrrichtung 7 antreibbar sind. Die Führungseinrichtung kann beispielsweise durch Schienen gebildet sein, entlang der die Transporteinheiten auf Rollen oder Rädern verfahrbar sind, und der Antrieb kann durch eine Kette, angetriebene Rollen oder Räder, Linearantriebe o.ä. erfolgen, wie dies im Stand der Technik an sich bekannt ist.

Jede Transporteinheit 2 ist an ihrer Oberseite mit einer Abschiebeeinrichtung versehen, die in der in Fig. 1 dargestellten Ausführungsform durch einen Bandförderer 8 gebildet ist. Der Bandförderer 8 ist zum Abgeben eines auf der Transporteinheit 2 befindlichen Stückgutteils 10 so antreibbar, dass eine Förderfläche 12, die das Obertrum des Bandförderers 8 und gleichzeitig die Oberseite der Transporteinheit 2 bildet, entgegen der Verfahrrichtung 7 in einer Abschieberichtung 14 bewegt wird. Bei einer Bewegung der Transporteinheit 2 mit einer vorgegebenen Verfahrgeschwindigkeit in Verfahrrichtung 7 kann auf diese Weise durch Antrieb des Bandförderers 8 in entgegengesetzter Richtung, d.h. in Abschieberichtung 14, und mit gleicher Geschwindigkeit erreicht werden, dass das Stückgutteil 10 relativ zur Umgebung still steht. Wenn dieser Zustand kurzzeitig oberhalb einer Aufnahmeeinrichtung 16 hergestellt wird, bewegt sich gleichsam die Transporteinheit 2 unter dem Stückgutteil 10 hinweg, so dass dieses ohne nennenswerte horizontale Relativgeschwindigkeit senkrecht nach unten in die Aufnahmerichtung 16 fällt. Bei dieser kann es sich beispielsweise wie dargestellt um einen Aufnahmebehälter oder um einen senkrecht oder schräg zu der Führungseinrichtung 4 angeordneten Abgabeförderer handeln, der das abgegebene Stückgutteil 10 zunächst aufnimmt und dann seitlich aus dem Bereich der Fördervorrichtung heraustransportiert.

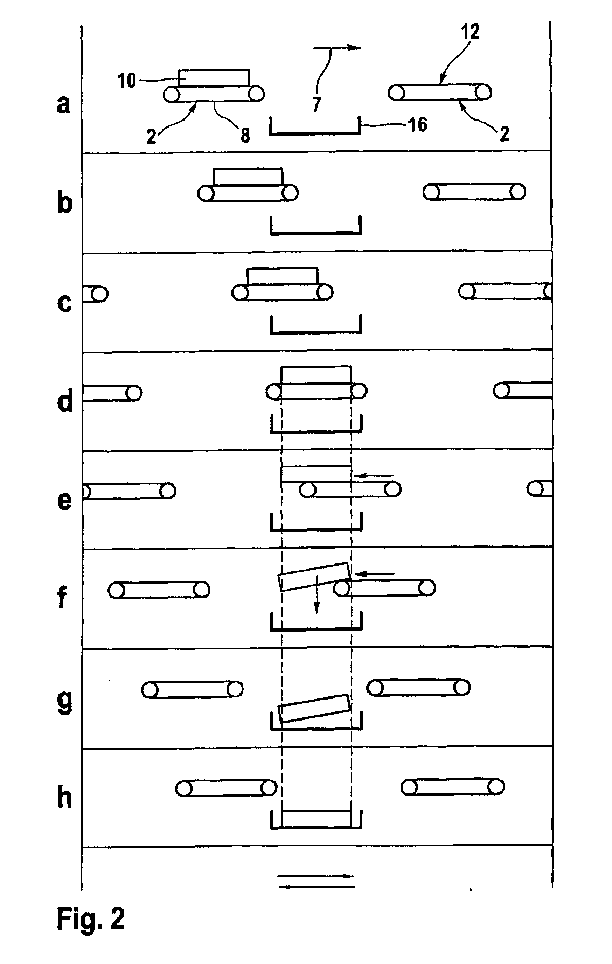

Fig. 2a - h erläutern einen solchen Abgabevorgang nochmals im einzelnen. Fig. 2a - d zeigen die Annäherung einer noch mit einem Stückgutteil 10 beladenen Transporteinheit 2 an eine Aufnahmeeinrichtung 16. Da eine Beschleunigung des Bandförderers 8 und des Stückgutteils 10 auf die entgegen der Verfahrrichtung 7 gerichtete Abschiebegeschwindigkeit nicht schlagartig erfolgen kann, muss der Anlauf des Bandförderers 8 bereits vor Erreichen der Stellung nach Fig. 2d erfolgen, etwa in einer Stellung nach Fig. 2a, b oder c.

Die Abschiebegeschwindigkeit des Bandförderers 8 kompensiert die Verfahrgeschwindigkeit der Transporteinheit 2, so dass das Stückgutteil 10 ab Erreichen der Position nach Fig. 1d relativ zu der Aufnahmeeinrichtung 16 stillsteht, von dem Bandförderer 8 abgeschoben wird (Fig. 2e, f) und schließlich frei in die Aufnahmeeinrichtung 16 (Fig. 2g, h) fällt.

Bei einer wie in Fig. 1 und 2 dargestellten, horizontalen Anordnung der Förderflächen 12 bzw. der Oberseite der Transporteinrichtungen 2 ist es zweckmäßig, wenn die Transporteinrichtungen in einem gegenseitigen Abstand angeordnet sind, der mindestens einer Längsabmessung des transportierten bzw. zu transportierenden Stückgutteils 10 entspricht, damit dieses problemlos in dem Zwischenraum zwischen zwei benachbarten Transporteinheiten 2 nach unten abgegeben werden kann, wie Fig. 2 zeigt. Während in Fig. 2 der gegenseitige Abstand zweier Transporteinheiten etwa der doppelten Länge des Stückgutteils 10 entspricht, dürfte er ersichtlich nicht geringer sein als dessen Länge, damit dieses nicht gegen die jeweils benachbarte Transporteinheit stößt.

Fig. 3 erläutert einige Varianten zur der vorstehend beschriebenen Ausführungsform der Erfindung. Während in Fig. 3a die Anordnung nach Fig. 1 und 3 dargestellt ist, zeigt Fig. 3b eine in Verfahrrichtung 7 gesehen ansteigend geneigte Anordnung der Abschiebeeinrichtung bzw. des Bandförderers 8. Der Vorteil einer solchen Anordnung liegt darin, dass der gegenseitige Abstand der Transporteinheiten 2 je nach Neigungswinkel der Abschiebeeinrichtungen und Höhe der Stückgutteile deutlich verringert werden kann. Je nach maximaler Höhe der Stückgutteile kann bei entsprechender Neigung der gegenseitige Abstand der Transporteinheiten bis auf Null reduziert werden, oder es ist sogar eine geringfügige Überlappung möglich.

Fig. 3c zeigt eine Ausführungsform, bei der die Abschiebeeinrichtungen der einzelnen Transporteinheiten in Verfahrrichtung 7 gesehen abfallend angeordnet sind, so dass die einzelnen Stückgutteile beim entgegen der Verfahrrichtung ablaufenden Abgabevorgang zunächst ansteigend transportiert werden und dann auf oder in die unterhalb befindliche Aufnahmeeinrichtung 16 fallen. Der Vorteil bei dieser Ausführungsform besteht darin, dass die Stückgutteile aufgrund der aufwärts weisenden Abgaberichtung tendenziell in horizontaler Lage auf/in die Aufnahmeeinrichtung 16 fallen.

Fig. 3d zeigt eine Variante, bei der die Abschiebeeinrichtung nicht als Bandförderer, sondern als Abschiebeelement (Pusher) 18 ausgebildet ist, das entsprechend einem Bandförderer mit einer der Verfahrgeschwindigkeit entsprechenden Abschiebegeschwindigkeit - allmählich bzw. mit wachsender Relativgeschwindigkeit bezüglich der Transporteinheit - antreibbar ist und dadurch das Stückgutteil 10 schonend von der Förderfläche 12 der Transporteinheit 2 abschiebt.

Fig. 3e erläutert eine Besonderheit, die bei allen erfindungsgemäßen Ausführungsformen Anwendung finden kann, nämlich eine abschnittsweise mitfahrende Aufnahmeeinrichtung 16, die mit einer Geschwindigkeit 20 in Verfahrrichtung bewegt werden kann, die kleiner ist als die Verfahrgeschwindigkeit der Fördervorrichtung selbst. Damit braucht das Stückgutteil 10 beim Abschiebevorgang nur mit einer geringeren Abschiebegeschwindigkeit bewegt werden, als dies bei den zuvor beschriebenen Ausführungsformen der Fall ist. Die Abschiebegeschwindigkeit der Abschiebeeinrichtung an der Transporteinheit, die für eine Übergabe des Stückgutteils ohne Relativgeschwindigkeit bezüglich der Aufnahmeeinrichtung erforderlich ist, ergibt sich als Differenz zwischen der Verfahrgeschwindigkeit der Transporteinheit und der Geschwindigkeit 20, mit der die Aufnahmeeinrichtung 16 mitbewegt wird.

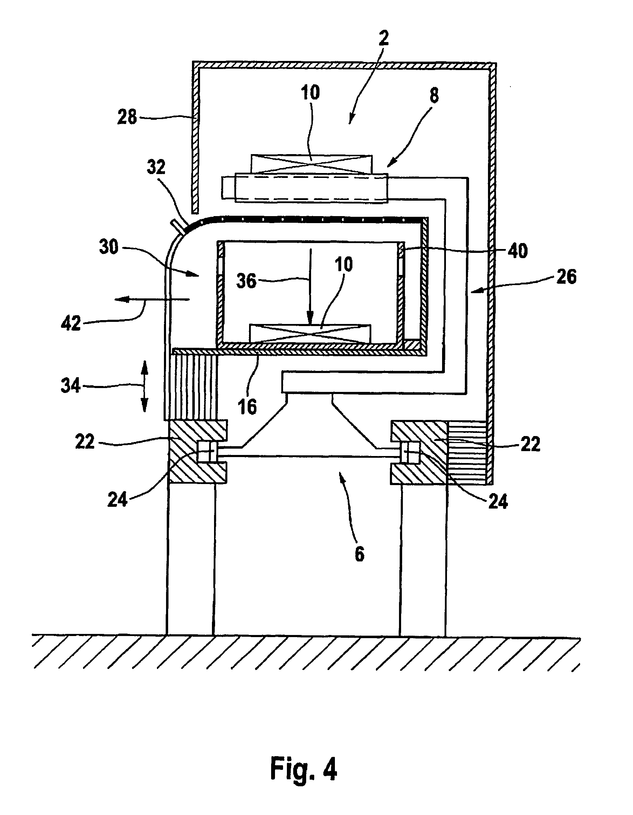

Fig. 4 erläutert eine weitere grundsätzliche Art der Ausgestaltung der Erfindung, nämlich die Anordnung der Transporteinheiten nicht seitlich neben, sondern oberhalb oder unterhalb der Führungseinrichtung. Als konkretes Beispiel zeigt Fig. 4 - im Querschnitt bzw. in Verfahrrichtung gesehen - eine Fördervorrichtung mit Wagen 6, die in zwei im Querschnitt C-förmigen, einander gegenüberliegenden Laufschienen 22 geführt sind, die die Führungseinrichtung 4 bilden. Jeder Wagen 6 weist auf jeder Seite mindestens ein Laufrad 24 auf, das in einer Laufschiene 22 geführt ist. Eine Abschiebeeinrichtung ist Form eines Bandförderers 8 ist an einer im Ganzen etwa C-förmig ausgebildeten Halterung 26 angeordnet, so daß sich diese mittig oberhalb des Wagens 6 und der Laufschienen 22 befindet. Auf jedem Wagen 6 kann eine oder können mehrere Transporteinheiten 2 mit einer entsprechenden Anzahl von Abschiebeinrichtungen 8 angeordnet sein.

Die Fördervorrichtung kann bereichsweise oder über ihren gesamten Verlauf mit einer Schutzabdeckung 28 versehen sein, die auf einer Entnahmeseite (links in Fig. 4) eine Öffnung 30 belässt, die ständig geöffnet sein kann oder aber beispielsweise mittels eines Rollladens 32 geöffnet und geschlossen werden kann. Fig. 4 zeigt eine geöffnete Stellung des Rollladens 32 sowie dessen Öffnungs- und Schließrichtung 34.

In einem zwischen Wagen 6 und Abschiebeeinrichtung 8 gebildeten Zwischenraum ist eine Aufnahmeeinrichtung 16 angeordnet, in die ein von der Transporteinheit 2 abgegebener Gegenstand 10 in Pfeilrichtung 36 von oben herabfällt. Die Aufnahmeeinrichtung 16 kann im einfachsten Fall eine ebene Fläche sein, von der die abgegebenen Gegenstände manuell entnommen werden, oder wie dargestellt ein Aufnahmefach mit einem im Wesentlichen horizontalen Boden und einer senkrechten Rückwand des Schutz gegen Berührung der bewegten Teile. Wahlweise kann ein herausnehmbares Behältnis 40 wie Korb o.ä. vorgesehen sein, um beispielsweise mehrere nacheinander abgegebene einzelne Gegenstände gesammelt entnehmen zu können (Entnahmerichtung 42).

Alternativ könnte die Aufnahmeeinrichtung 16 beispielsweise eine in Entnahmerichtung abwärts geneigte Rollenbahn aufweisen, so daß ein abgegebenes Stückgutteil selbsttätig in Querrichtung abgegeben wird.

In Abwandlung des in Fig. 4 dargestellten Prinzips kann vorgesehen sein, daß die Transporteinheit 2 nicht oberhalb des Wagens 6, sondern darunter angeordnet ist. Dadurch wird die Möglichkeit geschaffen, die Ein- und Ausgabe von Stückgütern besonders platzsparend ablaufen zu lassen.
- 2: Transporteinheit
- 4: Führungseinrichtung
- 6: Wagen
- 7: Verfahrrichtung
- 8: Bandförderer (Abschiebeeinrichtung)
- 10: Stückgutteil
- 12: Förderfläche
- 14: Abschieberichtung
- 16: Aufnahmeeinrichtung
- 18: Pusher (Abschiebeeinrichtung)
- 20: Mitbewegungsgeschwindigkeit
- 22: Laufschiene
- 24: Laufrad
- 26: Halterung
- 28: Schutzabdeckung
- 30: Öffnung
- 32: Rollladen
- 34: Öffnungs-/Schließrichtung
- 36: Fallrichtung
- 40: Behältnis
- 42: Entnahmerichtung

## Patentansprüche

1. Fördervorrichtung mit einer Anzahl von entlang einer Führungseinrichtung (4) bewegbaren Transporteinheiten (2), an deren Oberseite zur schonenden Auf- und/oder Abgabe von Stückgutteilen (10) jeweils eine entgegen einer Verfahrrichtung (7) der Transporteinheiten (2) antreibbare Abschiebeeinrichtung (8, 18) angeordnet ist, **dadurch gekennzeichnet, dass** die Abschiebeeinrichtung (8, 18) mit einer Abschiebegeschwindigkeit antreibbar ist, die ebenso groß wie eine Verfahrgeschwindigkeit der jeweiligen Transporteinrichtung (2) oder größer als diese ist.

2. Fördervorrichtung nach Anspruch 1, **dadurch gekennzeichnet, dass** die Abschiebeeinrichtung als Pusher (18), Bandförderer (8) oder Rollenförderer ausgebildet ist.

3. Fördervorrichtung nach einem der vorangehenden Ansprüche, **dadurch gekennzeichnet, dass** eine Förderfläche (12) der Abschiebeeinrichtung parallel zur Verfahrrichtung (7) angeordnet ist.

4. Fördervorrichtung nach einem der vorangehenden Ansprüche, **dadurch gekennzeichnet, dass** die Transporteinrichtungen (2) mit einem gegenseitigen Abstand in Verfahrrichtung (7) angeordnet sind, der mindestens einer Längenabmessung eines zu transportierenden Stückgutteils (10) entspricht.

5. Fördervorrichtung nach Anspruch 1 oder 2, **dadurch gekennzeichnet, dass** eine Förderfläche (12) der Abschiebeeinrichtung (8, 18) in Verfahrrichtung (7) gesehen ansteigend angeordnet ist.

6. Fördervorrichtung nach Anspruch 5, **dadurch gekennzeichnet, dass** die Transporteinrichtungen (2) mit einem gegenseitigen Abstand in Verfahrrichtung (7) angeordnet sind, der kleiner ist als eine Längenabmessung der zu transportierenden Stückgutteile (10).

7. Fördervorrichtung nach Anspruch 1 oder 2, **dadurch gekennzeichnet, dass** eine Förderfläche (12) in Verfahrrichtung gesehen abfallend angeordnet ist.

8. Fördervorrichtung nach Anspruch 7, **dadurch gekennzeichnet, dass** die Transporteinrichtungen (2) mit einem gegenseitigen Abstand in Verfahrrichtung (7) angeordnet sind, der größer ist als eine Längenabmessung der zu transportierenden Stückgutteile.

9. Fördervorrichtung nach einem der Ansprüche 5 bis 8, **dadurch gekennzeichnet, dass** die Förderflächen (12) unter einem Winkel von mindestens 2°, 5°, 10°, 15°, 20° oder 30° gegenüber der Horizontalen geneigt angeordnet sind.

10. Fördervorrichtung nach einem der vorangehenden Ansprüche, **dadurch gekennzeichnet, dass** jede Transporteinheit (2) mit Abstand seitlich neben der Führungseinrichtung (4) angeordnet ist.

11. Fördervorrichtung nach einem der vorangehenden Ansprüche, **dadurch gekennzeichnet, dass** je zwei Transporteinheiten (2) beiderseits der Führungseinrichtung (4) einander gegenüberliegend angeordnet sind.

12. Fördervorrichtung nach einem der Ansprüche 1 bis 9, **dadurch gekennzeichnet, dass** die Transporteinheiten (2) mit Abstand oberhalb der Führungseinrichtung (22) angeordnet sind.

13. Fördervorrichtung nach Anspruch 12, **dadurch gekennzeichnet, dass** die Transporteinheiten (2) an einer in Verfahrrichtung gesehen C-förmigen Halterung (26) angeordnet sind.

14. Fördervorrichtung nach Anspruch 12 oder 13, **dadurch gekennzeichnet, dass** eine Aufnahmeeinrichtung (16) in einem Zwischenraum zwischen der Führungseinrichtung (4) und den Transporteinheiten (2) angeordnet ist.

15. Fördervorrichtung nach einem der Ansprüche 1 bis 9, **dadurch gekennzeichnet, dass** die Transporteinheiten (2) mit Abstand unterhalb der Führungseinrichtung angeordnet sind.

## Claims

1. Conveying mechanism with a number of transporting units (2) that can be moved along a guiding device (4), said transporting units each having on their upper side a pushing-off device (8, 18) that can be driven counter to the direction of travel (7) of the transporting units (2), for releasing or discharging unit load items (10) gently, **characterised in that** the pushing-off device (8, 18) can be driven at a pushing-off speed that is greater than or equal to a speed of travel of the respective transporting device (2).

2. Conveying mechanism according to claim 1, **characterised in that** the pushing-off device is designed as a pusher (18), belt conveyor (8) or roller conveyor.

3. Conveying mechanism according to one of the preceding claims, **characterised in that** a conveyor surface (12) of the pushing-off device is arranged parallel to the direction of travel (7).

4. Conveying mechanism according to one of the preceding claims, **characterised in that** the transporting devices (2) are arranged spaced apart from one another in the direction of travel (7), by a distance which corresponds to at least one longitudinal dimension of a unit load item (10) that is to be transported.

5. Conveying mechanism according to claim 1 or 2, **characterised in that** a conveyor surface (12) of the pushing-off device (8, 18) is arranged at an upward slope in the direction of travel (7).

6. Conveying mechanism according to claim 5, **characterised in that** the transporting devices (2) are arranged spaced apart from one another in the direction of travel (7), at a distance which is less than one longitudinal dimension of the unit load items (10) that are to be transported.

7. Conveying mechanism according to claims 1 or 2, **characterised in that** a conveyor surface (12) is arranged at a downward slope in the direction of travel (7).

8. Conveying mechanism according to claim 7, **characterised in that** the transporting devices (2) are arranged spaced apart from one another in the direction of travel (7), at a distance which is greater than one longitudinal dimension of the unit load items that are to be transported.

9. Conveying mechanism according to one of the claims 5 to 8, **characterised in that** the conveyor surfaces (12) are arranged inclined at an angle of at least 2°, 5°, 10°, 15°, 20° or 30° relative to the horizontal.

10. Conveying mechanism according to one of the preceding claims, **characterised in that** each transporting unit (2) is arranged at a distance to the side next to the guiding device (4).

11. Conveying mechanism according to one of the preceding claims, **characterised in that** in each case two transporting units (2) are arranged on either side of the guiding device (4), lying opposite one another.

12. Conveying mechanism according to one of the claims 1 to 9, **characterised in that** the transporting units (2) are arranged at a distance above the guiding device (22).

13. Conveying mechanism according to claim 12, **characterised in that** the transporting units (2) are arranged on a C-shaped holder (26) as seen in the direction of travel.

14. Conveying mechanism according to claim 12 or 13, **characterised in that** a receiving means (16) is arranged in a space between the guiding device (4) and the transporting units (2).

15. Conveying mechanism according to one of the claims 1 to 9, **characterised in that** the transporting units (2) are arranged at a distance below the guiding device.

## Revendications

1. Mécanisme de transport comportant un certain nombre d'unités de transport (2) qui peuvent être déplacées le long d'un dispositif de guidage (4), lesdites unités de transport ayant chacune sur leur côté supérieur un dispositif de poussée (8, 18) qui peut être entraîné à l'encontre de la direction d'avance (7) des unités de transport (2), afin de libérer ou de décharger des articles à charge unitaire (10) en douceur, **caractérisé en ce que** le dispositif de poussée (8, 18) peut être entraîné à une vitesse de poussée qui est supérieure ou égale à une vitesse d'avance du dispositif de transport respectif (2).

2. Mécanisme de transport selon la revendication 1, **caractérisé en ce que** le dispositif de poussée est conçu sous la forme d'un poussoir (18), d'un transporteur à courroie (8) ou d'un transporteur à rouleaux.

3. Mécanisme de transport selon l'une quelconque des revendications précédentes, **caractérisé en ce qu'**une surface de transporteur (12) du dispositif de poussée est arrangée de manière parallèle par rapport à la direction d'avance (7).

4. Mécanisme de transport selon l'une quelconque des revendications précédentes, **caractérisé en ce que** les dispositifs de transport (2) sont arrangés de manière espacée les uns par rapport aux autres dans la direction d'avance (7), selon une distance qui correspond à au moins une dimension longitudinale d'un article à charge unitaire (10) qui doit être transporté.

5. Mécanisme de transport selon la revendication 1 ou la revendication 2, **caractérisé en ce qu'**une surface de transporteur (12) du dispositif de poussée (8, 18) est arrangée selon une inclinaison allant vers le haut dans la direction d'avance (7).

6. Mécanisme de transport selon la revendication 5, **caractérisé en ce que** les dispositifs de transport (2) sont arrangés de manière espacée les uns par rapport aux autres dans la direction d'avance (7), selon une distance qui est inférieure à une dimension longitudinale des articles à charge unitaire (10) qui doivent être transportés.

7. Mécanisme de transport selon la revendication 1 ou la revendication 2, **caractérisé en ce qu'**une surface de transporteur (12) est arrangée selon une inclinaison allant vers le bas dans la direction d'avance (7).

8. Mécanisme de transport selon la revendication 7, **caractérisé en ce que** les dispositifs de transport (2) sont arrangés de manière espacée les uns par rapport aux autres dans la direction d'avance (7), selon une distance qui est supérieure à une dimension longitudinale des articles à charge unitaire qui doivent être transportés.

9. Mécanisme de transport selon l'une quelconque des revendications 5 à 8, **caractérisé en ce que** les surfaces de transporteur (12) sont arrangées de manière inclinée selon un angle d'au moins 2°, 5°, 10°, 15°, 20° ou 30° par rapport à l'horizontale.

10. Mécanisme de transport selon l'une quelconque des revendications précédentes, **caractérisé en ce que** chaque unité de transport (2) est arrangée à une distance par rapport au côté se trouvant à côté du dispositif de guidage (4).

11. Mécanisme de transport selon l'une quelconque des revendications précédentes, **caractérisé en ce que** dans chaque cas deux unités de transport (2) sont arrangées de chaque côté du dispositif de guidage (4), reposant de manière opposée l'une par rapport à l'autre.

12. Mécanisme de transport selon l'une quelconque des revendications 1 à 9, **caractérisé en ce que** les unités de transport (2) sont arrangées à une distance au-dessus du dispositif de guidage (22).

13. Mécanisme de transport selon la revendication 12, **caractérisé en ce que** les unités de transport (2) sont arrangées sur un support en C (26) tel que l'on peut voir dans la direction d'avance.

14. Mécanisme de transport selon la revendication 12 ou la revendication 13, **caractérisé en ce qu'**un moyen de réception (16) est arrangé dans un espace entre le dispositif de guidage (4) et les unités de transport (2).

15. Mécanisme de transport selon l'une quelconque des revendications 1 à 9, **caractérisé en ce que** les unités de transport (2) sont arrangées à une distance sous le dispositif de guidage.
